# EUROPEAN PATENT APPLICATION

(11) **EP 3 979 360 A1**
(43) Date of publication of application: **06.04.2022**
(21) Application number: 20812918.9
(22) Date of filing: 27.05.2020
(51) Int. Cl.: H01M 4/13, H01M 4/139, H01M 4/62, H01M 10/052, H01M 10/0562, H01M 10/058

(54) **ALL-SOLID-STATE BATTERY AND METHOD FOR PRODUCING SAME**

(30) Priority: 28.05.2019 JP 2019099704
(71) Applicant: Kureha Corporation, Chuo-ku Tokyo 103-8552 (JP)
(72) Inventor: OURA, Kei, Toyota-shi, Aichi 471-8571 (JP); NAGASAWA, Yoshiyuki, Tokyo 103-8552 (JP); SAKUMA, Mitsuyasu, Tokyo 103-8552 (JP)
(74) Representative: Zimmermann & Partner Patentanwälte mbB
(86) International application number: PCT/JP2020/020933
(87) International publication number: WO 2020/241691

(57) **Abstract**

The present disclosure is to provide an all-solid-state battery having excellent cycle characteristics. The objective is achieved by an all-solid-state battery including: a positive electrode including a positive electrode layer, a negative electrode including a negative electrode layer, and a solid electrolyte layer arranged in between the positive electrode layer and the negative electrode layer, at least one layer selected from the group consisting of the positive electrode layer, the negative electrode layer, and the solid electrolyte layer containing a first binder in a particulate form and a second binder in a non-particulate form.

## Description

### Technical Field

The present disclosure relates to an all-solid-state battery and a method for producing the same.

### Background Art

As information-related devices and communication devices, such as computers, video cameras, and cellphones, are rapidly spread in recent years, development of batteries that are used as power sources of these are regarded as important. Furthermore, also in the automobile industry and the like, batteries having high power and high capacity for electric vehicles or hybrid electric vehicles have been developed.

Among all-solid-state batteries, all-solid-state lithium ion batteries attract attention from the perspective of high energy density due to utilization of battery reaction involving lithium ion transfer and from the perspective of using a solid electrolyte in place of an electrolyte solution containing an organic solvent as an electrolyte interposed in between a positive electrode and a negative electrode.

Patent Document 1 describes a binder containing a polymer having an average particle size of 0.1 µm to 1 µm as a structural material of a solid electrolyte layer.

Patent Document 2 describes that a coefficient of thermal expansion of a polymer binder is greater than a coefficient of thermal expansion of a peripheral component arranged in periphery of an all-solid-state battery.

### Citation List

### Patent Document

Patent Document 1: WO 2016/152262
Patent Document 2: JP 2016-081635 A

### Summary of Invention

### Technical Problem

Patent Document 1 describes that, by using a particulate polymer having a specific particle size as a binder, the number of contact points and a contact area between solid electrolyte particles can be increased, and an all-solid-state secondary battery having a small internal resistance can be formed. Furthermore, Patent Document 1 describes that, by setting the internal resistance small, deterioration of an active material and binder can be suppressed, and cycle characteristics of an all-solid-state battery can be enhanced.

However, according to the study conducted by the present inventors, when a particulate polymer described in Patent Document 1 is used as a binder, although the internal resistance is made small due to increase of ionic conductivity, cycle characteristics are not enhanced as much as expected.

In light of the circumstances described above, an object of the present disclosure is to provide an all-solid-state battery having excellent cycle characteristics, and a method for producing the same.

### Solution to Problem

The present disclosure provides an all-solid-state battery including: a positive electrode including a positive electrode layer, a negative electrode including a negative electrode layer, and a solid electrolyte layer arranged in between the positive electrode layer and the negative electrode layer,
at least one layer selected from the group consisting of the positive electrode layer, the negative electrode layer, and the solid electrolyte layer containing a first binder in a particulate form and a second binder in a non-particulate form.

The present disclosure provides a method for producing an all-solid-state battery,
the all-solid-state battery including: a positive electrode including a positive electrode layer, a negative electrode including a negative electrode layer, and a solid electrolyte layer arranged in between the positive electrode layer and the negative electrode layer,
the method including:
   preparing at least one layer selected from the group consisting of the positive electrode layer, the negative electrode layer, and the solid electrolyte layer by using at least a dispersion of a first binder and a liquid solution of a second binder.

### Advantageous Effects of Invention

The present disclosure can provide an all-solid-state battery having excellent cycle characteristics.

### Brief Description of Drawings

FIG. 1 is a schematic view illustrating an example of a state of an active material particle in a case where a second binder in a non-particulate form is used.
FIG. 2 is a schematic view illustrating an example of a state of an active material particle in a case where a first binder in a particulate form is used.
FIG. 3 is a cross-sectional schematic view illustrating an example of a state of an all-solid-state battery of the present disclosure.

### Description of Embodiments

### 1. All-Solid-State Battery

The present disclosure provides an all-solid-state battery including: a positive electrode including a positive electrode layer, a negative electrode including a negative electrode layer, and a solid electrolyte layer arranged in between the positive electrode layer and the negative electrode layer,
at least one layer selected from the group consisting of the positive electrode layer, the negative electrode layer, and the solid electrolyte layer containing a first binder in a particulate form and a second binder in a non-particulate form.

In related art, as the binder used for an all-solid-state battery, a dissolution binder that is completely dissolved in an organic solvent during production of an all-solid-state battery has been used. However, in an all-solid-state battery using such a binder in the related art, since a polymer as the binder uniformly covers surfaces of a solid electrolyte and an active material, the binder is arranged in the interface between the solid electrolyte and the active material. As a result, ionic conduction is hindered by the binder, and resistance of the all-solid-state battery is increased, and thus a problem of deterioration of cycle characteristics occurs.

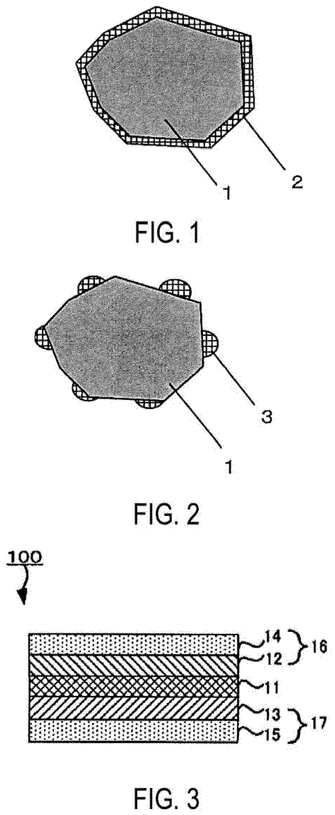

FIG. 1 is a schematic view illustrating an example of a state of an active material particle in a case where a second binder in a non-particulate form is used. Note that, in the drawing attached to the present specification, for convenience of illustration and understandability, scaling, dimensional ratio of length and width, and the like are suitably modified and exaggerated from those of an actual object.

As illustrated in FIG. 1, because the second binder 2 in a non-particulate form uniformly covers an active material particle 1 as illustrated by a hatched area, the second binder 2 hinders ionic conduction between the active material and the solid electrolyte, and the all-solid-state battery exhibits high resistance.

The present inventors found that the cycle characteristics of the all-solid-state battery become excellent by using a predetermined amount of a first binder in a particulate form that is dispersed as a particle in a solvent (note that, although this is accurately a dispersion medium because the first binder is dispersed, to make the explanation simple, description "solvent" is used in the present specification) (dispersion binder) and a predetermined amount of a second binder in a non-particulate form (dissolution binder) in combination as binders for an all-solid-state battery.

It is conceived that this is because formation of binding by point between an active material particle and a solid electrolyte particle is facilitated by using the first binder in a particulate form and the second binder in a non-particulate form in combination. FIG. 2 is a schematic view illustrating an example of a state of an active material particle in a case where a first binder in a particulate form is used. As illustrated in FIG. 2, the first binder in a particulate form tends to partially, and not entirely, cover the surface of the solid electrolyte particle and the active material particle. Therefore, in the interface between the solid electrolyte particle and the active material particle, on surfaces thereof, regions where parts that are not covered by the binder are in contact are formed. By this region, the ionic conductivity between the solid electrolyte particle and the active material particle is enhanced, and thus the all-solid-state battery exhibits low resistance. It is conceived that, by this, it is made possible to produce an all-solid-state battery that achieves enhancement of the adhesiveness between the solid electrolyte particle and the active material particle and enhancement of cycle characteristics in a compatible manner.

Meanwhile, when only the first binder in a particulate form is used, active material particles, solid electrolyte particles, and the like are less likely to be uniformly dispersed in a slurry for a layer formation, and distribution of the active material particles, the solid electrolyte particles, and the like in the formed layer tends to be ununiform. Thus, it is conceived that, when the distribution of the active material particles, the solid electrolyte particles, and the like in the layer is ununiform, a region that excessively conduct ions and a region that are less likely to conduct ions are formed in the all-solid-state battery, and as a result, balance in the all-solid-state battery is deteriorated and the cycle characteristics tend to be deteriorated. In contrast, it is conceived that by using a second binder that is dissolved at the time of layer formation in combination, the first binder is more easily uniformly dispersed in the slurry, distribution of the first binder in the formed layer becomes more uniform, and thus excellent cycle characteristics of the all-solid-state battery are achieved.

Note that, it is also conceived that, when only the second binder in a non-particulate form (dissolution binder) is used, if the amount of the binder is reduced, uniform covering by the binder of the active material particles and the solid electrolyte particles is suppressed, and ionic conductivity between the solid electrolyte particles and the active material particles can be enhanced. However, according to the knowledge of the present inventors, although ionic conductivity of the all-solid-state battery is surely enhanced if only a small amount of the second binder in a non-particulate form is used, the cycle characteristics is not enhanced to a degree that is expected. It is conceived that this is because, when only a small amount of the second binder is used, among the layers including the positive electrode layer, the negative electrode layer, and the solid electrolyte layer, tendency of uneven distribution of the binder component on the surface layer of the electrode or the separator layer or around the current collector is increased. Furthermore, also at this time, to enhance adhesiveness between the active material particles and the solid electrolyte particles, a certain amount of the second binder is required to be used. It is therefore also conceived that the second binder blocked pores of the active material of the electrode surface, and thus resistance around the current collector is increased. Due to these factors, it is conceived that, also when only the second binder is used in an amount that can ensure adhesiveness between the active material particles and the solid electrolyte particles although the surface of the active material particles and the solid electrolyte particles are not uniformly covered, balance of the all-solid-state battery is deteriorated, and the cycle characteristics are deteriorated.

As described above, by the combined use of the first binder in a particulate form and the second binder in a non-particulate form, excellent cycle characteristics of the all-solid-state battery can be achieved by enhancing ionic conductivity between the solid electrolyte particles and the active material particles while adhesiveness between the solid electrolyte particles and the active material particles are enhanced by the first binder. Furthermore, the second binder can make distribution of the active material particles, the solid electrolyte particles, and the like in the layer more uniform, and deterioration of the cycle characteristics can be suppressed while the balance of the all-solid-state battery is maintained. Furthermore, it is conceived that uneven distribution of the second binder or the like is also suppressed, and the cycle characteristics can be further enhanced.

### Binder

The binder includes a first binder in a particulate form (dispersion binder) and a second binder in a non-particulate form (dissolution binder), the second binder forming a layer by dissolving a resin in a solvent.

In the present disclosure, at least the first binder in a particulate form (dispersion binder) and the second binder in a non-particulate form (dissolution binder) are required to be contained in the same layer. When the layer is formed, by using the dissolution binder in addition to the dispersion binder, stability of the slurry for layer formation is enhanced, and as a result, uniformity of the layer can be enhanced.

The binder is only required to be contained in at least one layer selected from the group consisting of the positive electrode layer, the negative electrode layer, and the solid electrolyte layer described below, preferably contained in the positive electrode layer and the negative electrode layer, and more preferably contained in the positive electrode layer, the negative electrode layer, and the solid electrolyte layer.

Since an active material, a conductive material, and other additives besides the solid electrolyte are present in the positive electrode layer and the negative electrode layer, in particular, it is significantly important to achieve good contact between the active material and the solid electrolyte in the positive electrode layer and the negative electrode layer from the perspective of ensuring ion conduction path.

In a case where only the dissolution binder is used, since the binder uniformly covers the interface between the active material particles and the solid electrolyte particles, the binder hinders ionic conduction, thus resistance of the all-solid-state battery becomes high, and battery properties are deteriorated.

On the other hand, when a dispersion binder in a particulate form and a dissolution binder in a non-particulate form are used in combination, the interface between the active material particles and the solid electrolyte particles tends to be covered not entirely but partially, the desired ion conduction path can be ensured, the resistance of the all-solid-state battery is reduced, and thus excellent battery properties are achieved.

Furthermore, in a case where an active material is present in a positive electrode layer and a negative electrode layer and the active material is expanded and shrunk at the time of charging and discharging of the all-solid-state battery, when the dissolution binder and the dispersion binder are compared using the same added amounts, the dispersion binder can improve the cycle characteristics of the all-solid-state battery. It is conceived that this is because the interface between the active material particles and the solid electrolyte particles exhibits low resistance, the adhesiveness between the active material particles and the solid electrolyte particles is enhanced, and even after the expansion and shrinkage of the active material, the active material tends to maintain the structure that is roughly identical to that before the expansion and shrinkage. Note that, in the present disclosure, the effect of enhancing the cycle characteristics can be achieved regardless of the active material type.

The content of the first binder in a particulate form in each layer of the positive electrode layer, the negative electrode layer, and the solid electrolyte layer is not particularly limited. From the perspective of enhancing cycle characteristics by enhancing the adhesion effect of the first binder in a particulate form, the lower limit may be 0.01 mass% or greater, particularly 0.1 mass% or greater, particularly 0.2 mass% or greater, further 1.0 mass% or greater, or further 3.0 mass% or greater, in the layer when the total mass of the layer is 100 mass%. Furthermore, from the perspective of enhancing the effect of reducing the resistance of the all-solid-state battery, the upper limit may be 10.0 mass% or less, particularly 8.0 mass% or less, particularly 7.0 mass% or less, or further 5.0 mass% or less. The suitable content of the first binder in a particulate form is only required to be decided from the perspective of balancing these. For example, the content of the first binder in a particulate form in the layer may be 0.01 mass% or greater and 10.0 mass% or less, and is preferably 0.1 mass% or greater and 8.0 mass% or less, more preferably 0.2 mass% or greater and 7.0 mass% or less, even more preferably 1.0 mass% or greater and 7.0 mass% or less, and particularly preferably 3.0 mass% or greater and 5.0 mass% or less, when the total mass of the layer is 100 mass%.

The first binder in a particulate form is not particularly limited but may be at least one resin selected from the group consisting of fluororesins, polyolefin resins, and (meth)acrylic resins. By using at least one resin selected from fluororesins, polyolefin resins, and (meth)acrylic resins, excellent adhesiveness can be secured while withstand voltage of the binder is ensured. Note that (meth)acrylic means acrylic or methacrylic. Among these, from the perspective of further enhancing oxidation resistance of the resin in the positive electrode layer, fluororesins and polyolefin resins are preferred, and fluororesins are more preferred. Furthermore, from the perspective of enhancing adhesiveness of the solid electrolyte layer, the positive electrode layer, and the negative electrode layer, all of the positive electrode layer, the negative electrode layer, and the solid electrolyte layer preferably contain the type of resin that is identical to that of the first binder. Specifically, all of the positive electrode layer, the negative electrode layer, and the solid electrolyte layer preferably contain a fluororesin as the first binder, or preferably contains a polyolefin resin as the first binder; and more preferably contain a fluororesin as the first binder.

Examples of the fluororesin include polyvinylidene fluoride (PVDF), polyvinylidene fluoride-hexafluoropropylene (PVDF-HFP), polytetrafluoroethylene (PTFE), polyvinyl fluoride (PVF), and perfluoroalkoxy alkane (PFA).

Examples of the polyolefin resin include styrene butadiene rubber (SBR), polypropylene (PP), and polyethylene (PE).

Examples of the (meth)acrylic resin include polymethyl methacrylate (PMMA), polymethyl acrylate, polybutyl acrylate (PBA), and polyacrylonitrile (PAN).

The average particle size of the first binder in a particulate form in each of the positive electrode layer, the negative electrode layer, and the solid electrolyte layer is not particularly limited. The lower limit thereof may be 0.01 µm or greater, particularly 0.03 µm or greater, and further 0.1 µm or greater, even further 0.5 µm or greater, and yet even further 1.2 µm or greater. The upper limit thereof may be 170.0 µm or less, particularly 130.0 µm or less, further 80.0 µm or less, and even further 60.00 µm or less. For example, the average particle size of the first binder in a particulate form may be 0.01 µm or greater and 170.0 µm or less, and is preferably 0.03 µm or greater and 120.0 µm or less, more preferably 0.1 µm or greater and 130.0 µm or less, even more preferably 0.1 µm or greater and 80.0 µm or less, particularly preferably 0.5 µm or greater and 60.0 µm or less, and particularly preferably 1.2 µm or greater and 60.0 µm or less.

By setting the particle size of the first binder in a particulate form to be larger, it becomes easier to only partially cover surfaces of the active material particles and the solid electrolyte particles, and a lower resistance of the all-solid-state battery can be achieved. On the other hand, by setting the particle size to be smaller, adhesiveness of the active material particles and the solid electrolyte particles can be enhanced by increasing the points of adhesion of the first binder in a particulate form to surfaces of the solid electrolyte particles and the active material particles, and the cycle characteristics can be enhanced by making it easier to maintain the structure of the all-solid-state battery. The suitable particle size of the first binder in a particulate form is only required to be decided from the perspective of balancing these.

The first binder in a particulate form is present as particles in the layer; however, at the time of the layer formation, the first binder in a particulate form may be used in a state in which the first binder in a particulate form is dispersed in a solvent, or a binder in a state, in which the binder is polymerized in a particulate form in a solvent, may be used.

The solvent used for dispersing the first binder in a particulate form is not particularly limited as long as the solvent is a solvent that can stably disperse the first binder in a particulate form. Examples thereof include toluene and methyl ethyl ketone (MEK), and a mixed solvent of these may be used.

The shape of the second binder (dissolution binder) present in each of the positive electrode layer, the negative electrode layer, and the solid electrolyte layer is not particularly limited as long as the shape is non-particulate.

In the present disclosure, non-particulate means a state that is not particulate. Specifically, the non-particulate means a state in which a particle is not confirmed even when observation is performed by using a scanning electron microscope (SEM) or a transmission electron microscope (TEM) at a magnification of several tens of thousands times. Typically, it is conceived that the second binder is in a film form that partially covers a surface of the active material particle or the solid electrolyte particle.

Note that, in the present disclosure, as long as the shape of the second binder present in the formed layer is non-particulate, the shape of a raw material of the second binder used at the time of formation of the layer and before the second binder is dissolved in a solvent may be in a particulate form.

Examples of the resin to be used as a raw material of the second binder in a non-particulate form (dissolution binder) include epoxy resins, (meth)acrylic resins, polyolefin resins, silicone resins, alkylated derivatives of cellulose, and polyoxyalkylenes. Specific examples of the resin include ethyl cellulose (EC) and polyethylene oxide (PEO) from the perspective of high solubility in an organic solvent. Note that the second binder in a non-particulate form may be formed by dissolving the raw material used as the first binder in a particulate form in a solvent that can dissolve the raw material.

The solvent that dissolves the resin can be appropriately selected based on the type of the resin. In a case where the resin is ethyl cellulose (EC), examples thereof include N-methylpyrrolidone (NMP), toluene, and methyl ethyl ketone (MEK). Furthermore, in a case where the resin is PVDF, for example, N-methylpyrrolidone (NMP) can be used as the solvent.

The content of the second binder in a non-particulate form in each of the positive electrode layer, the negative electrode layer, and the solid electrolyte layer is not particularly limited. The content may be greater than 0 mass% and 1.0 mass% or less, or greater than 0 mass% and 0.7 mass% or less, when the total mass of the layer is 100 mass%. By setting the content of the second binder to be greater, dispersibility of particles, such as the active material particles and the solid electrolyte particles, present in the layer can be enhanced. By setting the content of the second binder to be smaller, the second binder can suppress increase of resistance in the all-solid-state battery caused by excessive covering of surfaces of the active material particles and the solid electrolyte particles. The suitable content of the second binder in a non-particulate form is only required to be decided from the perspective of balancing these.

### All-Solid-State Battery

FIG. 3 is a cross-sectional schematic view illustrating an example of an all-solid-state battery of the present disclosure. As illustrated in FIG. 3, an all-solid-state battery 100 has a positive electrode 16 including a positive electrode layer 12 and a positive electrode current collector 14, a negative electrode 17 including a negative electrode layer 13 and a negative electrode current collector 15, and a solid electrolyte layer 11 arranged in between the positive electrode 16 and the negative electrode 17.

### Positive electrode

The positive electrode has at least a positive electrode layer and, as necessary, has a positive electrode current collector.

The positive electrode layer contains a positive electrode active material and may also contain, for example, a solid electrolyte, a conductive material, and a binder as optional components.

The type of the positive electrode active material is not particularly limited, and examples thereof include positive electrode active materials represented by general formula: LiₓM_{y}O_{z} (M is a transition metal element, x = 0.02 to 2.2, y = 1 to 2, z = 1.4 to 4). In the general formula, M is at least one selected from the group consisting of Co, Mn, Ni, V, Fe, and Si, and may be at least one selected from the group consisting of Co, Ni, and Mn. Specific examples of such a positive electrode active material include LiCoO₂, LiMnO₂, LiNiO₂, LiVO₂, LiNi_{1/3}Co_{1/3}Mn_{1/3}O₂, LiMn₂O₄, Li(Ni_{0.5}Mn_{1.5})O₄, Li₂FeSiO₄, and Li₂MnSiO₄.

Examples of the positive electrode active material other than those represented by general formula LiₓM_{y}O_{z} above include lithium titanate (e.g., Li₄Ti₅O₁₂), lithium metal phosphate (LiFePO₄, LiMnPO₄, LiCoPO₄, LiNiPO₄), transition metal oxides (V₂O₅, MoO₃), TiS₂, LiCoN, Si, SiO₂, Li₂SiO₃, Li₄SiO₄, and lithium storage intermetallic compounds (e.g., Mg2Sn, Mg2Ge, Mg2Sb, Cu₃Sb).

The shape of the positive electrode active material is not particularly limited and, for example, may be a particulate form or a thin film form. From the perspective of ease of handling, the shape may be a particulate form.

When the positive electrode active material is particles, the average particle size (D50) of the particles is, for example, preferably 1 nm or greater and 100 µm or less, and more preferably 10 nm or greater and 30 µm or less.

A coating layer containing a Li-ion conductive oxide may be formed on a surface of the positive electrode active material. This is because a reaction between the positive electrode active material and the solid electrolyte can be suppressed.

Examples of the Li-ion conductive oxide include LiNbO₃, Li₄Ti₅O₁₂, and Li₃PO₄. The lower limit of the thickness of the coating layer is, for example 0.1 nm or greater and may be 1 nm or greater. On the other hand, the upper limit of the thickness of the coating layer is, for example, 100 nm or less and may be 20 nm or less.

The content of the positive electrode active material in the positive electrode layer is not particularly limited and, for example, when the total mass of the positive electrode layer is 100 mass%, the content may be in a range from 10 mass% to 98.2 mass%.

Examples of the solid electrolyte used in the positive electrode layer include those identical to solid electrolytes used for the solid electrolyte layer described below.

The content of the solid electrolyte in the positive electrode layer is not particularly limited and, for example, when the total mass of the positive electrode layer is 100 mass%, the content may be in a range from 1 mass% to 80 mass%.

As the conductive material, a known conductive material can be used, and examples thereof include carbon materials and metal particles. Examples of the carbon material include at least one selected from the group consisting of carbon black such as acetylene black and furnace black, carbon nanotubes, and carbon nanofibers. Among these, from the perspective of electrical conductivity, at least one selected from the group consisting of carbon nanotubes and carbon nanofibers is preferred. The carbon nanotube and the carbon nanofiber may be a vapor grown carbon fiber (VGCF). Examples of the metal particle include particles of Ni, Cu, Fe, and SUS.

The content of the conductive material in the positive electrode layer is not particularly limited.

The binder to be used in the positive electrode layer include the first binder in a particulate form and the second binder in a non-particulate form described above.

The thickness of the positive electrode layer is not particularly limited and, for example, may be from 10 to 250 µm, and particularly may be from 20 to 200 µm.

The positive electrode layer can be formed by a known method.

For example, a positive electrode layer is obtained by preparing a slurry for a positive electrode layer by placing and agitating a positive electrode active material and a binder in a solvent, and applying and drying the slurry on one face of a substrate of, for example, a positive electrode current collector.

Examples of the solvent include toluene and methyl ethyl ketone (MEK).

The method of applying the slurry for a positive electrode layer on one face of a substrate of, for example, a positive electrode current collector is not particularly limited. Examples thereof include a doctor blade method, metal mask printing method, electrostatic coating method, dip coating method, spray coating method, roll coating method, gravure printing method, and screen printing method.

As another method of forming the positive electrode layer, the positive electrode layer may be formed by subjecting powder of a positive electrode mixture containing a positive electrode active material and, as necessary, other components to pressing.

As the positive electrode current collector, a known metal that can be used as a current collector for an all-solid-state battery can be used. Examples of such a metal include metal materials containing at least one or two or more elements selected from the group consisting of Cu, Ni, Al, V, Au, Pt, Mg, Fe, Ti, Co, Cr, Zn, Ge, and In.

The form of the positive electrode current collector is not particularly limited and can be in various forms, such as a foil form and a mesh form.

The shape as a whole positive electrode is not particularly limited and may be a sheet form.

In this case, the thickness as the whole positive electrode is not particularly limited and can be appropriately selected based on the target performance.

### Negative electrode

The negative electrode has at least a negative electrode layer and, as necessary, has a negative electrode current collector.

The negative electrode layer contains a negative electrode active material and may also contain, for example, a solid electrolyte, a conductive material, and a binder as optional components.

As the negative electrode active material, a known material can be used, and examples thereof include single Li, a lithium alloy, carbon, single Si, a Si alloy, and Li₄Ti₅O₁₂ (LTO).

Examples of the lithium alloy include LiSn, LiSi, LiAl, LiGe, LiSb, LiP, and Liln.

Examples of the Si alloy include an alloy of metals such as Li, and in addition, the Si alloy may be an alloy with at least one metal selected from the group consisting of Sn, Ge, and Al.

The shape of the negative electrode active material is not particularly limited and, for example, may be a particulate form or a thin film form. From the perspective of ease of handling, the shape may be a particulate form.

When the negative electrode active material is particles, the average particle size (D50) of the particles is, for example, preferably 1 nm or greater and 100 µm or less, and more preferably 10 nm or greater and 30 µm or less.

Examples of the conductive material, binder, and solid electrolyte contained in the negative electrode layer include those identical to the conductive material, binder, and solid electrolyte contained in the positive electrode layer described above.

The contents of the first binder in a particulate form and the second binder in a non-particulate form in the negative electrode layer may be contents that are identical to the contents in the positive electrode layer.

The method of forming the negative electrode layer is not particularly limited, and examples thereof include a method of subjecting powder of a negative electrode mixture containing a negative electrode active material and, as necessary, other components such as a conductive material and a binder to pressing. Furthermore, another example of the method of forming the negative electrode layer is a method in which a slurry for a negative electrode layer containing a negative electrode active material and a solvent and, as necessary, other components such as a conductive material and a binder is prepared, the slurry for a negative electrode layer is applied on one face of a negative electrode current collector or a solid electrolyte layer, and then the slurry for a negative electrode layer is dried. The solvent used in the slurry for a negative electrode layer include those identical to solvents used for the slurry for a positive electrode layer. Examples of the method of applying the slurry for a negative electrode layer on one face of a negative electrode current collector or a solid electrolyte layer include methods identical to methods of applying the slurry for a positive electrode layer.

As the negative electrode current collector, metals that are identical to metals used as the positive electrode current collector described above can be used.

The form of the negative electrode current collector is not particularly limited and can be in the same form as that of the positive electrode current collector.

The shape as a whole negative electrode is not particularly limited and may be a sheet form.

In this case, the thickness as the whole negative electrode is not particularly limited and can be appropriately selected based on the target performance.

### Solid Electrolyte Layer

The solid electrolyte layer contains at least a solid electrolyte.

The solid electrolyte include sulfide-based solid electrolytes and oxide-based solid electrolytes.

Examples of the sulfide-based solid electrolyte include Li₂S-P₂S₅, Li₂S-SiS₂, LiX-Li₂S-SiS₂, LiX-Li₂S-P₂S₅, LiX-Li₂O-Li₂S-P₂S₅, LiX-Li₂S-P₂O₅, LiX-Li₃PO₄-P₂S₅, and Li₃PS₄. Note that the description "Li2S-P₂S₅" above means a raw material formed by using a raw material composition containing Li₂S and P₂S₅, and the same applies to other descriptions. Furthermore, "X" of the LiX above refers to a halogen element. In the raw material composition containing the LiX, one type or two or more types of LiX may be contained. When two or more types of LiX are contained, the mixed ratio of the two or more types is not particularly limited.

The molar ratio of elements in the sulfide-based solid electrolyte can be controlled by preparing the contents of the elements in the raw material. Furthermore, the molar ratio and the composition of the elements in the sulfide-based solid electrolyte can be measured by, for example, ICP emission spectrometry.

The sulfide-based solid electrolyte may be glass or a crystalline material or may be a glass-ceramic that is crystalline.

The crystalline state of the sulfide-based solid electrolyte can be confirmed by, for example, performing X-ray powder diffraction measurement by using CuKα radiation on the sulfide-based solid electrolyte.

The glass can be obtained by subjecting a raw material composition (e.g., mixture of Li₂S and P₂S₅) to an amorphous treatment. Examples of the amorphous treatment include mechanical milling. The mechanical milling may be dry mechanical milling or wet mechanical milling, but the latter is preferred. This is because adhesion of the raw material composition onto a wall of a container or the like can be prevented.

The glass-ceramics can be obtained by, for example, subjecting glass to a heat treatment.

Furthermore, the crystalline material can be obtained by, for example, subjecting glass to a heat treatment or subjecting a raw material composition to a solid phase reaction treatment.

Examples of the oxide-based solid electrolyte include Li_{6.25}La₃Zr₂Al_{0.25}O₁₂, Li₃PO₄, and Li_{3 + x}PO_{4 - x}Nₓ (LiPON).

From the perspective of ease of handling, the shape of the solid electrolyte is preferably a particulate form.

Furthermore, the average particle size (D50) of the particles of the solid electrolyte is not particularly limited, and the lower limit thereof may be 0.5 µm or greater and the upper limit may be 2 µm or less.

One type of the solid electrolyte can be used alone, or two or more types of the solid electrolytes can be used. Furthermore, when two or more types of the solid electrolytes are used, the two or more types of the solid electrolytes may be mixed.

In the present disclosure, the average particle size of particles is a value of median diameter (D50) based on volume measured by laser diffraction/scattering particle size distribution measurement unless otherwise noted. Furthermore, in the present disclosure, the median diameter (D50) is a diameter at which, when particles are arranged in the order from a particle with a small particle size, the cumulative volume of particles becomes half (50%) the entire volume (volume average diameter).

The content proportion of the solid electrolyte in the solid electrolyte layer is not particularly limited, and when the total mass of the solid electrolyte layer is 100 mass%, the lower limit thereof is, for example, 50.0 mass% or greater, and preferably 60.0 mass% or greater, and the upper limit thereof is preferably 99.2 mass% or less.

From the perspective of exhibiting plasticity, the solid electrolyte layer may contain a binder for binding the solid electrolyte particles. Examples of such a binder include the first binder in a particulate form and the second binder in a non-particulate form described above. However, from the perspective of enhancing cycle characteristics by enhancing the adhesion effect of the first binder and from the perspective of enhancing the effect of reducing the resistance of the all-solid-state battery, the lower limit of the content of the first binder in a particulate form in the solid electrolyte layer may be 0.01 mass% or greater, particularly 0.1 mass% or greater, particularly 0.2 mass% or greater, further 1.0 mass% or greater, and even further 3.0 mass% or greater, and the upper limit of the content may be 8.0 mass% or less, particularly 7.0 mass% or less, and further 5.0 mass% or less when the total mass of the solid electrolyte layer is 100 mass%. Specifically, the content of the first binder in a particulate form in the solid electrolyte layer may be 0.01 mass% or greater and 10.0 mass% or less, and is preferably 0.1 mass% or greater and 8.0 mass% or less, more preferably 0.2 mass% or greater and 7.0 mass% or less, even more preferably 1.0 mass% or greater and 7.0 mass% or less, and particularly preferably 3.0 mass% or greater and 5.0 mass% or less, when the total mass of the solid electrolyte layer is 100 mass%. Furthermore, in order to easily achieve high power for a battery, from the perspective of preventing excessive aggregation of solid electrolyte particles and making it possible to form a solid electrolyte layer containing solid electrolyte particles that are uniformly dispersed, the solid electrolyte layer may contain greater than 0 mass% and 1.0 mass% or less, or greater than 0 mass% and 0.7 mass% or less, of the second binder in a non-particulate form when the total mass of the solid electrolyte layer is 100 mass%.

The thickness of the solid electrolyte layer is appropriately adjusted based on the structure of the battery, is not particularly limited, and is typically 0.1 µm or greater and 1 mm or less.

As the method of forming the solid electrolyte layer, for example, the solid electrolyte layer may be formed by subjecting powder of a raw material of a solid electrolyte layer containing a solid electrolyte and, as necessary, other components to pressing. As another method, the solid electrolyte layer may be formed by applying a slurry for a solid electrolyte layer containing a binder on a support, drying the slurry for a solid electrolyte layer, and releasing the support.

The all-solid-state battery has an exterior body that houses the positive electrode, the negative electrode, and the solid electrolyte layer as necessary.

The shape of the exterior body is not particularly limited, and examples thereof include a laminate type.

The material of the exterior body is not particularly limited as long as the material is stable for electrolyte, and examples thereof include resins such as polypropylene, polyethylene, and acrylic resins.

Examples of the all-solid-state battery include an all-solid-state lithium battery utilizing a deposition-dissolution reaction of metal lithium as a reaction of a negative electrode, an all-solid-state lithium ion battery in which lithium ions transfer between positive and negative electrodes, an all-solid-state sodium battery, an all-solid-state magnesium battery, and an all-solid-state calcium battery, and the all-solid-state battery may be an all-solid-state lithium ion battery. Furthermore, the all-solid-state battery may be a primary battery or a secondary battery.

Examples of the shape of the all-solid-state battery include a coin type, a laminate type, a cylinder type, and a square type.

### 2. All-Solid-State Battery

The present disclosure provides a method for producing an all-solid-state battery,
the all-solid-state battery including a positive electrode including a positive electrode layer, a negative electrode including a negative electrode layer, and a solid electrolyte layer arranged in between the positive electrode layer and the negative electrode layer,
the method including:
   preparing at least one layer selected from the group consisting of the positive electrode layer, the negative electrode layer, and the solid electrolyte layer by using at least a dispersion of a first binder and a liquid solution of a second binder.

The positive electrode, the negative electrode, and the solid electrolyte layer are identical to those described in 1. All-Solid-State Battery above, and the description is omitted here.

As the method for producing the all-solid-state battery of the present disclosure, for example, first, a solid electrolyte layer is formed by applying a slurry for a solid electrolyte layer containing at least a dispersion of a first binder, a liquid solution of a second binder, and a solid electrolyte on a support, drying the slurry for a solid electrolyte layer, and releasing the support. Then, a positive electrode including a positive electrode layer is obtained by applying a slurry for a positive electrode layer containing at least the dispersion of the first binder, the liquid solution of the second binder, and a positive electrode active material on one face of a positive electrode current collector, and drying the slurry for a positive electrode. Thereafter, a negative electrode including a negative electrode layer is obtained by applying a slurry for a negative electrode layer containing at least the dispersion of the first binder, the liquid solution of the second binder, and a negative electrode active material on one face of a negative electrode current collector, and drying the slurry for a negative electrode. Then, an all-solid-state battery can be obtained by arranging the solid electrolyte layer in between the positive electrode layer and the negative electrode layer in a manner that the arrangement is in the order of the positive electrode current collector, the positive electrode layer, the solid electrolyte layer, the negative electrode layer, and the negative electrode current collector.

As the first binder and the solvent contained in the dispersion and the second binder and the solvent contained in the liquid solution that are used in the preparation, those described for 1. All-Solid-State Battery above can be used. Note that the first binder and the second binder are kneaded and formed into a slurry, and then dried to form the positive electrode layer, the solid electrolyte layer, and the negative electrode layer. The solvent of the first binder and the solvent of the second binder are preferably solvents that disperse the first binder and dissolve the second binder in a manner that a state, in which the first binder is dispersed and the second binder is dissolved, is maintained even in this slurry state.

The method of dispersing the first binder is not particularly limited and examples thereof include a method of dispersing the first binder in a solvent by using, for example, an ultrasonic homogenizer.

In the preparation, the dispersion of the first binder and the liquid solution of the second binder are only required to be used during preparation of at least one layer selected from the group consisting of the positive electrode layer, the negative electrode layer, and the solid electrolyte layer. The dispersion of the first binder and the liquid solution of the second binder may be used during preparation of all of the positive electrode layer, the negative electrode layer, and the solid electrolyte layer.

The amount of the first binder in a particulate form used in the preparation is not particularly limited, and the lower limit of the content of the first binder may be 0.01 mass% or greater, particularly 0.1 mass% or greater, particularly 0.2 mass% or greater, further 1.0 mass% or greater, and even further 3.0 mass% or greater, and the upper limit of the content may be 8.0 mass% or less, particularly 7.0 mass% or less, and further 5.0 mass% or less when the total mass (solid content in slurry) of any one of the resulting positive electrode layer, negative electrode layer, or solid electrolyte layer is 100 mass%. Specifically, the amount of the first binder may be 0.01 mass% or greater and 10.0 mass% or less, and is preferably 0.1 mass% or greater and 8.0 mass% or less, more preferably 0.2 mass% or greater and 7.0 mass% or less, even more preferably 1.0 mass% or greater and 7.0 mass% or less, and particularly preferably 3.0 mass% or greater and 5.0 mass% or less, when the total solid content in the slurry to form the layer is 100 mass%.

The amount of the second binder used in the preparation is not particularly limited, and the content of the second binder may be greater than 0 mass% and 1.0 mass% or less, and greater than 0 mass% and 0.7 mass% or less when the total mass (solid content in slurry) of any one of the resulting positive electrode layer, negative electrode layer, or solid electrolyte layer is 100 mass%.

The all-solid-state battery is preferably produced in a condition where water content in the system is removed as much as possible. For example, in each production process, it is conceived that reducing pressure in the system and purging the system with a gas that substantially contains no moisture, such as an inert gas, are effective.

### [Examples]

### Example 1

### • Production of Dispersion of First Binder in Particulate Form

Dehydrated toluene as a solvent and a PVDF powder (particle size: 1.5 µm) as a first binder in a particulate form were mixed in a mass ratio of 90:10. At this time, the liquid temperature of the dehydrated toluene was maintained at 30°C or lower, the PVDF powder was added while stirring is performed and stirred for 1 hour or longer by using a magnetic stirrer, and thus a first binder dispersion in a state in which the particles are dispersed in the solvent was produced.

### • Production of Positive Electrode

A positive electrode active material (Li(NiMnCo)_{1/3}O₂) and a sulfide-based solid electrolyte (Lil-LiO₂-Li₂S-P₂S₅, synthesized by our company) were mixed in a manner that the mass ratio of positive electrode active material:sulfide-based solid electrolyte was 75:25, and weighing was performed in a manner that 93.5 mass% of the obtained mixture was contained in a positive electrode layer when the total mass of the positive electrode layer was 100 mass%.

Thereafter, weighing was performed in a manner that 3.0 mass% in terms of the solid content of the binder dispersion of PVDF (PVDF powder; particle size: 1.5 µm) was contained in the positive electrode layer when the total mass of the positive electrode layer was 100 mass%, and 3.0 mass% of a conductive material (vapor grown carbon fibers; available from Showa Denko K.K.) was contained in the positive electrode layer when the total mass of the positive electrode layer was 100 mass%.

Furthermore, toluene (dehydrated grade) as a solvent was added, and the mixture was kneaded for 1 minute by using an ultrasonic homogenizer (UH-50, available from SMT Co., Ltd.).

Finally, a second binder liquid solution in which ethyl cellulose (EC, available from Nacalai Tesque, Inc.) was dissolved in toluene was added in a manner that 0.5 mass% of the EC was contained in the positive electrode layer when the total mass of the positive electrode layer was 100 mass%, and thus a positive electrode mixture was obtained. Toluene was added in a manner that the solid fraction in the positive electrode mixture was 60 mass%, the mixture was kneaded for 1 minute by using an ultrasonic homogenizer, and thus a slurry for a positive electrode layer was produced.

Thereafter, a positive electrode layer was formed by applying the slurry for a positive electrode layer on a surface of aluminum foil (available from Showa Denko K.K.) by using an applicator, naturally drying for 5 minutes, and then heat-drying at 100°C for 30 minutes. Thus, a positive electrode including a positive electrode current collector and the positive electrode layer was produced.

### • Production of Negative Electrode

A negative electrode active material (natural graphite; particle size: 15.0 µm) and a sulfide-based solid electrolyte (Lil-LiO₂-Li₂S-P₂S₅, synthesized by our company) were mixed in a manner that the mass ratio of negative electrode active material:sulfide-based solid electrolyte was 60:40, and weighing was performed in a manner that 96.5 mass% of the obtained mixture was contained in a negative electrode layer when the total mass of the negative electrode layer was 100 mass%.

Furthermore, the first binder dispersion using PVDF (particle size: 1.5 µm) was weighed in a manner that 3.0 mass% in terms of the solid content of the PVDF was contained in the negative electrode layer when the total mass of the negative electrode layer was 100 mass%.

Furthermore, toluene (dehydrated grade) as a solvent was added, and the mixture was kneaded for 1 minute by using an ultrasonic homogenizer (UH-50, available from SMT Co., Ltd.).

Finally, a second binder liquid solution in which ethyl cellulose (EC, available from Nacalai Tesque, Inc.) was dissolved in toluene was added in a manner that 0.5 mass% of the EC was contained in the negative electrode layer when the total mass of the negative electrode layer was 100 mass%, and thus a negative electrode mixture was obtained. Toluene was added in a manner that the solid fraction in the negative electrode mixture was 55 mass%, the mixture was kneaded for 1 minute by using an ultrasonic homogenizer, and thus a slurry for a negative electrode layer was produced.

Thereafter, a negative electrode layer was formed by applying the slurry for a negative electrode layer on a surface of a negative electrode current collector (copper foil) by using an applicator, naturally drying for 5 minutes, and then heat-drying at 100°C for 30 minutes, and thus a negative electrode including a negative electrode current collector and the negative electrode layer was produced.

### • Production of Solid Electrolyte Layer

In an inert gas, in 96.5 parts by mass of a sulfide-based solid electrolyte raw material, the first binder dispersion using PVDF (particle size: 1.5 µm) was added in a manner that 3.0 parts by mass of the PVDF was contained in terms of the solid content, the second binder liquid solution in which ethyl cellulose (EC, available from Nacalai Tesque, Inc.) was dissolved in toluene was added in a manner that 0.5 parts by mass of the EC was contained in terms of the solid content, and thus a mixture was obtained.

Furthermore, toluene as a solvent was added to the mixture in a manner that the solid content became 35 mass%, then the mixture was kneaded by using an ultrasonic homogenizer (UH-50, available from SMT Co., Ltd.), and thus a slurry for a solid electrolyte layer was obtained.

The slurry for a solid electrolyte layer was applied on aluminum foil by using an applicator and dried, and thus a solid electrolyte layer was obtained.

### • Production of All-Solid-State Battery

An all-solid-state battery was obtained by punching out the aluminum foil and the solid electrolyte layer into 1 cm², releasing the aluminum foil, sandwiching and stacking the solid electrolyte layer in between the positive electrode layer of the positive electrode and the negative electrode layer of the negative electrode, and pressing by applying 4.3 ton.

### Example 2

An all-solid-state battery was produced in the same manner as in Example 1 except for changing the particle size of the PVDF powder to 0.1 µm.

### Example 3

An all-solid-state battery was produced in the same manner as in Example 1 except for changing the particle size of the PVDF powder to 90.0 µm.

### Example 4

An all-solid-state battery was produced in the same manner as in Example 1 except for changing the particle size of the PVDF powder to 0.6 µm.

### Example 5

An all-solid-state battery was produced in the same manner as in Example 1 except for changing the particle size of the PVDF powder to 15.3 µm.

### Example 6

An all-solid-state battery was produced in the same manner as in Example 1 except for the following.

The first binder in a particulate form was changed to SBR. The particle size of the SBR powder was 0.1 µm.

Furthermore, the solvent was changed from toluene to dehydrated methyl ethyl ketone (MEK).

### Example 7

An all-solid-state battery was produced in the same manner as in Example 1 except for the following.

The first binder in a particulate form was changed to SBR. The particle size of the SBR powder was 1.0 µm.

Furthermore, the solvent was changed from toluene to dehydrated methyl ethyl ketone (MEK).

### Example 8

An all-solid-state battery was produced in the same manner as in Example 1 except for the following.

The first binder in a particulate form was changed to SBR, and the particle size of the SBR powder was 94.2 µm.

Furthermore, the solvent was changed from toluene to dehydrated methyl ethyl ketone (MEK).

### Example 9

An all-solid-state battery was produced in the same manner as in Example 1 except for the following.

The content proportion of the PVDF powder was changed to 0.3 mass%, the content proportion of the mixture of the positive electrode active material and the solid electrolyte for the positive electrode layer was changed to 96.2 mass%, the content proportion of the mixture of the negative electrode active material and the solid electrolyte for the negative electrode layer was changed to 99.2 mass%, and the content proportion of the solid electrolyte for the solid electrolyte layer was changed to 99.2 mass%.

### Example 10

An all-solid-state battery was produced in the same manner as in Example 1 except for the following.

The content proportion of the PVDF powder was changed to 5.0 mass%, the content proportion of the mixture of the positive electrode active material and the solid electrolyte for the positive electrode layer was changed to 91.5 mass%, the content proportion of the mixture of the negative electrode active material and the solid electrolyte for the negative electrode layer was changed to 94.5 mass%, and the content proportion of the solid electrolyte for the solid electrolyte layer was changed to 94.5 mass%.

### Example 11

An all-solid-state battery was produced in the same manner as in Example 1 except for changing the particle size of the PVDF powder to 0.06 µm.

### Example 12

An all-solid-state battery was produced in the same manner as in Example 1 except for changing the particle size of the PVDF powder to 136.8 µm.

### Example 13

An all-solid-state battery was produced in the same manner as in Example 1 except for the following.

The first binder in a particulate form was changed to SBR. The particle size of the SBR powder was 0.03 µm.

Furthermore, the solvent was changed from toluene to dehydrated methyl ethyl ketone (MEK).

### Example 14

An all-solid-state battery was produced in the same manner as in Example 1 except for the following.

The first binder in a particulate form was changed to SBR. The particle size of the SBR powder was 154.5 µm.

Furthermore, the solvent was changed from toluene to dehydrated methyl ethyl ketone (MEK).

### Comparative Example 1

An all-solid-state battery was produced in the same manner as in Example 1 except for the following.

As a solvent, PVDF (particle size: 1.5 µm) was dissolved by using dehydrated N-methylpyrrolidone (NMP) to form a second binder liquid solution using the PVDF, and this was used together with a second binder liquid solution obtained by dissolving ethyl cellulose (EC, available from Nacalai Tesque, Inc.) in toluene, and the solvent for slurry production was changed to dehydrated N-methylpyrrolidone (NMP). That is, in Comparative Example 1, an all-solid-state battery containing no first binder in a particulate form was produced.

### Comparative Example 2

An all-solid-state battery was produced in the same manner as in Example 1 except for the following.

The second binder liquid solution using EC was not added, the content proportion of the mixture of the positive electrode active material and the solid electrolyte for the positive electrode layer was changed to 94.0 mass%, the content proportion of the mixture of the negative electrode active material and the solid electrolyte for the negative electrode layer was changed to 97.0 mass%, and the content proportion of the solid electrolyte for the solid electrolyte layer was changed to 97.0 mass%. That is, in Comparative Example 2, an all-solid-state battery containing no second binder in a non-particulate form was produced.

### Example 15

An all-solid-state battery was produced in the same manner as in Example 1 except for the following.

The content proportion of the PVDF powder was changed to 0.1 mass%, the content proportion of the mixture of the positive electrode active material and the solid electrolyte for the positive electrode layer was changed to 96.4 mass%, the content proportion of the mixture of the negative electrode active material and the solid electrolyte for the negative electrode layer was changed to 99.4 mass%, and the content proportion of the solid electrolyte for the solid electrolyte layer was changed to 99.4 mass%.

### Example 16

An all-solid-state battery was produced in the same manner as in Example 1 except for the following.

The content proportion of the PVDF powder was changed to 8.0 mass%, the content proportion of the mixture of the positive electrode active material and the solid electrolyte for the positive electrode layer was changed to 88.5 mass%, the content proportion of the mixture of the negative electrode active material and the solid electrolyte for the negative electrode layer was changed to 91.5 mass%, and the content proportion of the solid electrolyte for the solid electrolyte layer was changed to 91.5 mass%.

### • Peel Strength Measurement

For each electrode layer of the positive electrode layers and the negative electrode layers used in Examples and Comparative Examples, peel strength was measured. Note that, although the peel strength was measured by the following method in the present examples, the measurement of the peel strength when an embodiment of the present invention is implemented is not limited to the following method, and the peel strength may be measured by another method.

One face of a double-sided adhesive tape was adhered to a surface side of the electrode layer, and the other face was adhered to a metal plate. The metal plate was fixed, and a part that was not the part adhered to the electrode layer through the double-sided adhesive tape in the metal plate was connected to a load cell, and the metal plate was moved in a vertical direction at a speed of 50 mm/min. The peel strength of the electrode layer was calculated by dividing the average load applied to the load cell at this time by the width of the electrode layer (2 cm). The results are shown in Tables 1 to 2. In Tables 1 to 2, Li(NiMnCo)_{1/3}O₂ was written as NMC111.

### • Li Ionic Conductivity Measurement

Measurement of the Li ionic conduction at room temperature by the AC impedance method was performed for each all-solid-state battery obtained in Examples and Comparative Examples. For the measurement, Solartron 1260 was used, and the measurement condition included an applied voltage of 10 mV and a measurement frequency region from 0.01 MHz to 1 MHz. The results are shown in Tables 1 to 2.

Note that each test cell of the all-solid-state batteries obtained by Examples and Comparative Examples was prepared by the following method.

First, for the all-solid-state battery before charging, constant-current charging was performed until the terminal voltage per one all-solid-state battery becomes a set voltage in an environment at 25°C ± 4°C at a current value of 0.1 C, and then charging was performed for 1 hour by constant-current/constant-voltage charging by which constant-voltage charging maintaining at a set voltage was performed. After initial charging, constant-current/constant-voltage discharging was performed at 0.2 C up to 3.0 V for 10 hours.

Thereafter, constant-current charging was performed at a current value of 0.2 C up to 4.0 V in an environment at 25°C ± 4°C.

By this, a test cell used for the measurement of Li ionic conduction was prepared.

### • Cycle Test

For the test cell of the all-solid-state battery, taking 2.5 hours of constant-current/constant-voltage charging to 4.2 V at a current value of 1 C and constant-current discharging to 3.0 V at a current value of 1 C in an environment at 40°C as one cycle, 300 cycles of this cycle was performed. Then, cycle characteristics (capacity retention rate (%)) was calculated by dividing the discharge capacity A at the 300th cycle by the discharge capacity B at the 5th cycle and multiplying the obtained value by 100.

Note that three test cells were prepared for each all-solid-state battery of Examples and Comparative Examples, and the capacity retention rate (%) of each of Examples and Comparative Examples was an average value of cycle test results for the three test cells.

**Table 1**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| First binder | PVDF | PVDF | PVDF | PVDF | PVDF | SBR | SBR | SBR | PVDF | PVDF |
| Solvent | Toluene | Toluene | Toluene | Toluene | Toluene | MEK | MEK | MEK | Toluene | Toluene |
| Mass proportion (%) in layer | 3.0 | 3.0 | 3.0 | 3.0 | 3.0 | 3.0 | 3.0 | 3.0 | 0.3 | 5.0 |
| Positive electrode active material type | NMC111 | NMC111 | NMC111 | NMC111 | NMC111 | NMC111 | NMC111 | NMC111 | NMC111 | NMC111 |
| Positive electrode active material particle size (µm) | 20 | 20 | 20 | 20 | 20 | 20 | 20 | 20 | 20 | 20 |
| Negative electrode active material type | Natural graphite | Natural graphite | Natural graphite | Natural graphite | Natural graphite | Natural graphite | Natural graphite | Natural graphite | Natural graphite | Natural graphite |
| Negative electrode active material particle size (µm) | 15 | 15 | 15 | 15 | 15 | 15 | 15 | 15 | 15 | 15 |
| First binder particle size (µm) | 1.5 | 0.1 | 90.0 | 0.6 | 15.3 | 0.1 | 1.0 | 94.2 | 1.5 | 1.5 |
| Second binder | EC | EC | EC | EC | EC | EC | EC | EC | EC | EC |
| Added amount of second binder (mass%) | 0.5 | 0.5 | 0.5 | 0.5 | 0.5 | 0.5 | 0.5 | 0.5 | 0.5 | 0.5 |
| Evaluation items | | | | | | | | | | |
| Negative electrode layer peel strength (N/m) | 5.6 | 6.1 | 4.8 | 5.8 | 5.2 | 7.5 | 8.3 | 6.3 | 3.3 | 7.0 |
| Positive electrode layer peel strength (N/m) | 7.1 | 7.2 | 5.6 | 7.1 | 6.5 | 9.1 | 11.2 | 8.3 | 4.9 | 13.0 |
| Ionic conductivity (× 10^{^}-2 S/cm) | 2.4 | 2.2 | 2.9 | 2.3 | 2.8 | 2.3 | 2.0 | 2.5 | 2.8 | 1.5 |
| Cycle characteristics (%) | 93.0 | 90.1 | 91.4 | 92.3 | 92.0 | 92.0 | 91.0 | 90.5 | 91.2 | 92.3 |

**[Table 2]**

| | Example 11 | Example 12 | Example 13 | Example 14 | Comparative Example 1 | Comparative Example 2 | Example 15 | Example 16 |
|---|---|---|---|---|---|---|---|---|
| First binder | PVDF | PVDF | SBR | SBR | - | PVDF | PVDF | PVDF |
| Solvent | Toluene | Toluene | MEK | MEK | NMP | Toluene | Toluene | Toluene |
| Mass proportion (%) in layer | 3.0 | 3.0 | 3.0 | 3.0 | - | 3.0 | 0.1 | 8.0 |
| Positive electrode active material type | NMC111 | NMC111 | NMC111 | NMC111 | NMC111 | NMC111 | NMC111 | NMC111 |
| Positive electrode active material particle size (µm) | 20 | 20 | 20 | 20 | 20 | 20 | 20 | 20 |
| Negative electrode active material type | Natural graphite | Natural graphite | Natural graphite | Natural graphite | Natural graphite | Natural graphite | Natural graphite | Natural graphite |
| Negative electrode active material particle size (µm) | 15 | 15 | 15 | 15 | 15 | 15 | 15 | 15 |
| First binder particle size (µm) | 0.06 | 136.8 | 0.03 | 154.5 | - | 1.5 | 1.5 | 1.5 |
| Second binder | EC | EC | EC | EC | EC/PVDF | - | EC | EC |
| Added amount of second binder (mass%) | 0.5 | 0.5 | 0.5 | 0.5 | 3.5 | - | 0.5 | 0.5 |
| Evaluation items | | | | | | | | |
| Negative electrode layer peel strength (N/m) | 6.2 | 3.4 | 13.4 | 3.2 | 7.0 | 4.2 | 1.4 | 13.1 |
| Positive electrode layer peel strength (N/m) | 7.8 | 4.9 | 15.4 | 3.9 | 9.2 | 5.1 | 2.2 | 18.0 |
| Ionic conductivity (× 10^{^}-2 S/cm) | 1.1 | 3.8 | 0.9 | 2.7 | 4.2 | 3.9 | 5.2 | 1.1 |
| Cycle characteristics (%) | 86.1 | 86.8 | 88.0 | 89.1 | 76.2 | 78.9 | 84.1 | 81.9 |

The results of Examples 1 to 16 and Comparative Examples 1 to 2 show that the combined use of the first binder in a particulate form and the second binder in a non-particulate form enhances cycle characteristics of an all-solid-state battery compared to a case where either one of them is used.

Regarding the average particle size of the first binder in a particulate form, the comparison between Examples 1 to 5 and Example 12 and the comparison between Examples 6 to 8 and Example 14 reveal that the case where the average particle size of the first binder in a particulate form is less than 130.0 µm achieves enhancement of the peel strength of the electrode layer. As a result, it was found that, as the electrode layer expands and shrinks associated with charging and discharging, maintenance of the electrode structure was facilitated, and the cycle characteristics of the all-solid-state battery were enhanced.

Furthermore, from the comparison between Examples 1 to 5 and Example 11 and from the comparison between Examples 6 to 8 and Example 13, in the case where the first binder in a particulate form having the average particle size of greater than 0.1 µm is used, although the adhesiveness between the active material particles and the solid electrolyte particles (peel strength of electrode layer) is slightly reduced, the binder tends to partially, and not entirely, cover the interface between the active material particles and the solid electrolyte particles, and thus the ionic conductivity of the all-solid-state battery is enhanced.

Furthermore, it was found that, when the average particle size of the first binder in a particulate form is in a range from 0.1 to 80.0 µm, good balance between the adhesion effect of the first binder in a particulate form and the effect of reducing the resistance of the all-solid-state battery is achieved, and the cycle characteristics of the all-solid-state battery are further enhanced.

Regarding the added amount of the first binder in a particulate form (Examples 9, 10, 15, and 16), the adhesiveness is enhanced when the added amount of the first binder in a particulate form is large, and the converse phenomenon occurs when the added amount of the first binder in a particulate form is small; and by using a combination of the first binder in a particulate form and the second binder in a non-particulate form and by allowing the layer to contain from 0.1 to 8.0 mass% of the first binder in a particulate form, the cycle characteristics of the all-solid-state battery are enhanced, and by allowing from 0.2 to 7.0 mass% to be contained, the cycle characteristics of the all-solid-state battery are further enhanced.

The present application claims priority to the Japanese Patent Application No. 2019-099704 filed on May 28, 2019, and the contents of the specification, the claims, and the drawings of this application are incorporated into the present application.

### [Industrial Applicability]

According to an embodiment of the present invention, cycle characteristics of an all-solid-state battery can be enhanced. It is therefore expected that further popularization of the all-solid-state battery is promoted.

### [Reference Signs List]

- 1: Active material particle

- 2: Non-particulate second binder
- 3: Particulate first binder
- 11: Solid electrolyte layer
- 12: Positive electrode layer
- 13: Negative electrode layer
- 14: Positive electrode current collector
- 15: Negative electrode current collector
- 16: Positive electrode
- 17: Negative electrode
- 100: All-solid-state battery

## Claims

1. An all-solid-state battery comprising: a positive electrode including a positive electrode layer, a negative electrode including a negative electrode layer, and a solid electrolyte layer arranged in between the positive electrode layer and the negative electrode layer,
at least one layer selected from the group consisting of the positive electrode layer, the negative electrode layer, and the solid electrolyte layer containing a first binder in a particulate form and a second binder in a non-particulate form.

2. The all-solid-state battery according to claim 1, wherein, when a total mass of the layer containing the first binder and the second binder is 100 mass%, from 0.2 to 7.0 mass% of the first binder is contained in the layer.

3. The all-solid-state battery according to claim 1 or 2, wherein an average particle size of the first binder is from 0.1 to 130.0 µm.

4. The all-solid-state battery according to any one of claims 1 to 3, wherein the first binder is at least one resin selected from the group consisting of fluororesins, polyolefin resins, and (meth)acrylic resins.

5. The all-solid-state battery according to any one of claims 1 to 4, wherein, when a total mass of the layer containing the first binder and the second binder is 100 mass%, greater than 0 mass% and 1.0 mass% or less of the second binder is contained in the layer.

6. A method for producing an all-solid-state battery,
the all-solid-state battery comprising: a positive electrode including a positive electrode layer, a negative electrode including a negative electrode layer, and a solid electrolyte layer arranged in between the positive electrode layer and the negative electrode layer,
the method comprising:
preparing at least one layer selected from the group consisting of the positive electrode layer, the negative electrode layer, and the solid electrolyte layer by using at least a dispersion of a first binder and a liquid solution of a second binder.
